# EUROPEAN PATENT SPECIFICATION

(11) **EP 1 960 059 B1**
(45) Date of publication and mention of the grant of the patent: **14.11.2012**
(21) Application number: 06820053.4
(22) Date of filing: 14.11.2006
(51) Int. Cl.: A62C 2/06, A62C 3/00, F16L 5/04

(54) **FIRE DAMPER DUCT SLEEVE**
BRANDSCHUTZKLAPPENKANALMUFFE
MANCHON DE CONDUIT COUPE-FEU

(30) Priority: 13.12.2005 FI 20051279
(43) Date of publication of application: 27.08.2008
(73) Proprietor: Fläkt Woods AB, 55184 Jönköping (SE)
(72) Inventor: LAMPINEN, Esa, FI-33100 Tampere (FI)
(74) Representative: Heinänen, Pekka Antero
(86) International application number: PCT/FI2006/000372
(87) International publication number: WO 2007/068788

(56) References cited:
- EP-A- 0 805 314
- EP-A2- 1 038 555
- US-A- 4 600 634
- US-A- 5 753 854
- US-A- 5 985 385

## Description

The present invention relates to a fire damper duct sleeve having its perimeter over a relatively narrow annular area provided with a perforation which serves to retard thermal conduction in the duct sleeve element and which perforation is sealed to eliminate air leaks by a refractory material.

Accordingly, the invention more particularly relates to a fire damper for use on an air duct of a circular cross section, wherein the damper blade obviously also is circularly shaped. Broadly, the function of a fire damper is such that under normal conditions the blade is either in an open or a closed position as desired. Under fire, the fusible link of the fire damper melts thus allowing the blade to close if it has previously been in its open position.

The air duct fire damper is mounted on, for instance, a wall or ceiling structure or on the surface thereof. Onto the duct sleeve of the fire damper is generally mounted a circular fire barrier flange serving to receive the heat conducted along the duct sleeve and forward the heat to the wall structure (when the fire barrier flange is mounted against the wall). Additionally, the fire barrier flange may be employed for sealing the perforation of the duct sleeve element that serves to retard thermal conduction in the fire damper duct. Still further, a fire barrier can be utilized in the mounting of a fire damper on a wall surface.

The present invention relates to a fire damper duct sleeve having a perforation, or a pattern of holes, made thereon in order to retard conduction of heat via this element of the damper structure. A problem arises therefrom that the perforation may create a potential area of air leaks in the damper structure that subsequently must be sealed. One possible arrangement is to adapt a fire barrier flange about the duct sleeve at the annular perforation. The fire barrier flange is made of a calcium silicate plate, for instance. Under fire, thermal deformations of the fire barrier flange and the duct sleeve will occur, whereby gaps develop in the joint between the duct sleeve and the fire barrier flange.

An example of a sealing arrangement is disclosed in patent publication EP 1038555 A2. Therein, an intumescent seal material is employed to protect the perforation made on the damper duct sleeve. However, another problem arises therefrom that the intumescent seal material after swelling becomes porous and, due to the pressure differential arising during fire, may disintegrate locally thus developing leakage points.

Another example of a sealing arrangement is disclosed in EP 0805314 A1. Therein is disclosed a fire damper duct sleeve having its perimeter over a relatively narrow annular area provided with a perforation which serves to retard thermal conduction in the duct sleeve element and which perforation is sealed to eliminate air leaks by a refractory material. However, such material loses its sealing properties quite fast after the fire has started.

It is an object of the present invention to provide a fire damper duct sleeve according to the invention wherein the sealing of the sleeve perforation performs in a superior fashion over the prior art. A fire damper duct sleeve is characterized in that the refractory material is flexible.

A preferred embodiment of the fire damper duct sleeve according to the invention is characterized in that the seal material has a fibrous structure such as that of a flexible band of silica fiber.

Another preferred embodiment of the fire damper duct sleeve according to the invention is characterized in that over the fibrous seal material is placed a fire barrier flange.

The features of the invention include that the flexible refractory material such as a silica fiber band stays firmly fixed under fire. By virtue of its flexibility, the material serves as a seal under fire even when deformations occur in the damper structure.

The invention is next described in more detail by making reference to the appended drawings in which
FIG. 1 shows an axonometric view of a wall portion having a fire damper of circular cross section mounted thereon;
FIG. 2 shows the assembly of FIG. 1 now in a side view;
FIG. 3 shows a fire damper duct sleeve having an annular perforation made about its perimeter;
FIG. 4 shows the sleeve of FIG. 3 now having a band of fibrous, refractory seal material placed about its entire perimeter; and
FIG. 5 shows the sleeve of FIG. 4 now having a fire barrier flange placed over the fibrous seal material band.

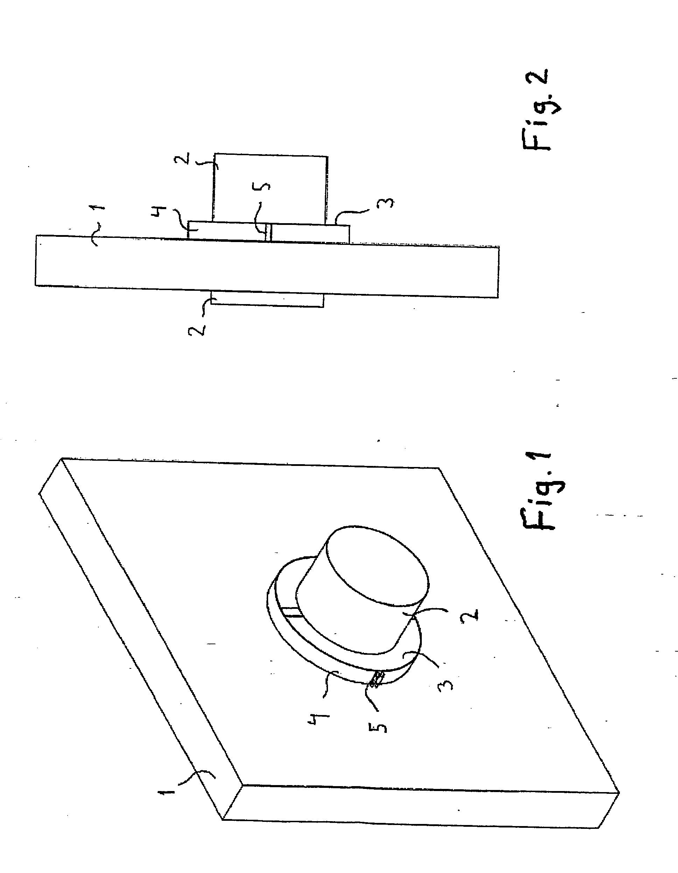

Accordingly, the invention relates to fire damper of a circular cross section mounted in a hole made through a wall 1. This kind of mounting is illustrated in more detail in FIGS. 1 and 2. The fire damper typically comprises an air duct sleeve element 2 extending through the thickness of wall 1 and a fire barrier flange 3 surrounding the duct sleeve element so as to face the wall. About the fire barrier flange is adapted a tightening band 4 having a width substantially covering the thickness of the flange 3 and a length substantially extending over the entire perimeter of the flange. The tightening band is tensioned in place by means of screws, for instance, as illustrated in the diagrams at the tightening point denoted by reference numeral 5.

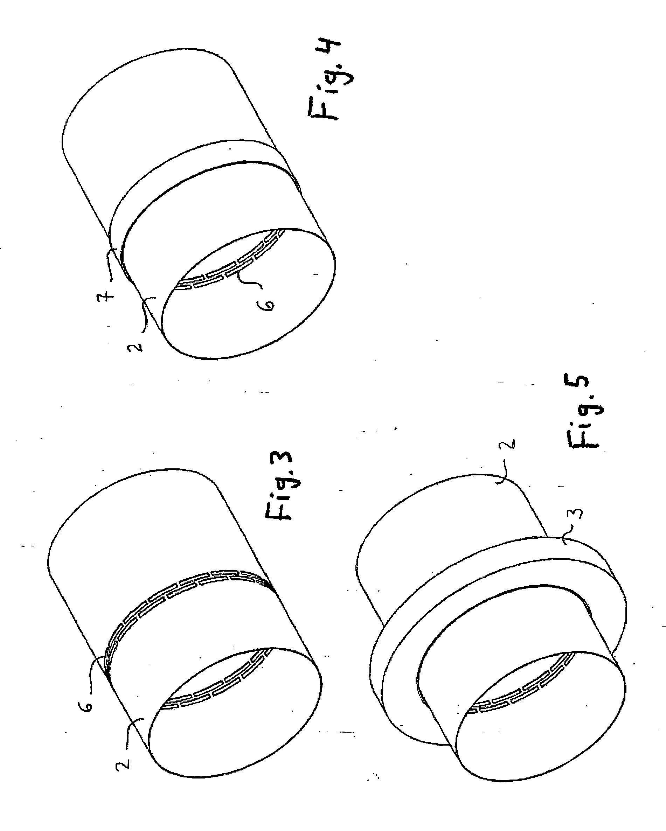

The details of the present invention are illustrated in FIGS. 3-5. In FIG. 3 is shown a portion of the duct sleeve element 2 of a fire damper mounted in ventilation duct, whereby the duct sleeve element has an annular perforation 6, or a pattern of holes, made along a short axial length about the sleeve perimeter. As mentioned above, the function of the perforation 6 is to retard thermal conduction along the duct sleeve element 2 of the fire damper structure.

FIG. 4 shows a mounting step having a refractory seal material band 7 with sufficient air-tightness and also flexibility, as well as of a width substantially equal to the perforation pattern or even wider, placed over the perforation 6. The seal material band 7 may be selected to have a fibrous structure. In this case, a suitable choice is a silica fiber band, for instance. This kind of a band remains firmly affixed under fire and thus serves as a seal by virtue of its flexible structure even when the fire damper structure undergoes dimensional deformations under fire.

FIG. 5 shows a mounting step having a refractory seal material band 7 covered by a fire barrier sleeve that may be manufactured, for instance, of a calcium silicate plate or other like suitable refractory material. While not shown in FIG. 5, over the fire barrier flange is mounted a tightening band 4 as shown in FIGS. 1 and 2.

To a person skilled in the art it is obvious that the invention is not limited by the above-described exemplary embodiments, but rather may be varied within the inventive spirit and scope of the appended claims.

## Claims

1. A fire damper duct sleeve (2) having its perimeter over a relatively narrow annular area provided with a perforation (6) which serves to retard thermal conduction in the duct sleeve element and which perforation is sealed to eliminate air leaks by a refractory material (7), **characterized in that** the refractory material is flexible, such that it serves as a seal under fire when deformations occur in the damper structure.

2. The fire damper duct sleeve of claim 1, **characterized in that** the refractory material (7) is selected from the group of fibrous materials, for instance, a flexible band of silica fiber.

3. The fire damper duct sleeve of claim 1 or 2, **characterized in that** over said flexible refractory material (7) is placed a fire barrier sleeve (3).

## Patentansprüche

1. Brandschutzklappenkanalmuffe (2), deren Umfang über einen verhältnismäßig schmalen ringförmigen Bereich mit einer Perforation (6) versehen ist, die dazu dient, thermische Leitfähigkeit in dem Kanalmuffenelement zu verzögern, und welche Perforation mittels eines feuerfesten Materials (7) abgedichtet ist, um Luftverlust zu unterbinden, **dadurch gekennzeichnet, dass** das feuerfeste Material flexibel ist, sodass es im Brandfall als Dichtung dient, wenn die Brandschutzklappe Deformationen unterliegt.

2. Brandschutzklappenkanalmuffe nach Anspruch 1, **dadurch gekennzeichnet, dass** das feuerfeste Material (7) aus der Gruppe faserförmiger Materialien ausgewählt ist, beispielsweise ein flexibles Band aus Siliziumdioxidfaser.

3. Brandschutzklappenkanalmuffe nach Anspruch 1 oder 2, **dadurch gekennzeichnet, dass** eine Feuerabsperrungshülse (3) über dem flexiblen feuerfesten Material (7) angeordnet ist.

## Revendications

1. Manchon de conduit de clapet coupe-feu (2) dont le périmètre est muni, sur une surface annulaire relativement étroite, d'une perforation (6) qui sert à retarder la conduction thermique dans l'élément formant manchon de conduit et qui est scellée par une matière réfractaire (7) pour éliminer les fuites d'air, **caractérisé en ce que** la matière réfractaire est souple de sorte qu'elle sert de joint sous le feu quand des déformations se produisent dans la structure du clapet.

2. Manchon de conduit de clapet coupe-feu selon la revendication 1, **caractérisé en ce que** la matière réfractaire (7) est sélectionnée à partir du groupe de matières fibreuses, par exemple, une bande souple de fibres de silice.

3. Manchon de conduit de clapet coupe-feu selon la revendication 1 ou 2, **caractérisé en ce que** sur ladite matière réfractaire souple (7) est placé une barrière de séparation ignifuge (3).
